# EUROPEAN PATENT SPECIFICATION

(11) **EP 0 787 915 B1**
(45) Date of publication and mention of the grant of the patent: **15.05.2002**
(21) Application number: 97850014.8
(22) Date of filing: 03.02.1997
(51) Int. Cl.: F16C 33/78, F16C 33/32

(54) **A rolling bearing**
Wälzlager
Palier à contact de roulement

(30) Priority: 05.02.1996 SE 9600408
(43) Date of publication of application: 06.08.1997
(73) Proprietor: Aktiebolaget SKF, S-415 50 Göteborg (SE)
(72) Inventor: Bildtsén, Christian, 443 35 Lerun (SE); Lindsten, Göran, 431 88 Möndal (SE); Wendeberg, Hans, 426 71 Västra Frölunda (SE)
(74) Representative: Westman, P. Börje I.

(56) References cited:
- EP-A- 0 304 872
- DE-A- 3 824 104
- US-A- 4 797 013
- US-A- 4 856 916
- US-A- 4 886 377

## Description

The pre-caracterising part of claim 1 is based on US-4 856 916 A.

In modern bearing technology it often is desirable to be able to determine different bearing parameters and/or bearing assembly parameters by taking out different signals from the bearing for processing in a desired manner and/or to allow signal transfer between a shaft on which the inner race ring of the bearing is mounted and a housing in which the outer race ring of the bearing is arranged.

For different signals it earlier has been developed different solutions, whereby for taking out different signals has been developed different separate current transferring arrangements, e.g. radio transmitters, which transmits the signals to receivers outside the bearing. Such systems are often complicated and cumbersome, at the same time as they might cause spark erosion in the function surfaces of the bearing or cause other operational disturbances in the bearing.

The purpose of the present invention is to provide a solution of this problem and to provide a rolling bearing wherein is obtained a simple transfer of electrical signals and also for easily leading away current from the bearing, at the same time as the above mentioned problems are eliminated, and this has been achieved by means of the features defined in the accompanying claim 1. The dependant claims describe particular embodiments of the invention.

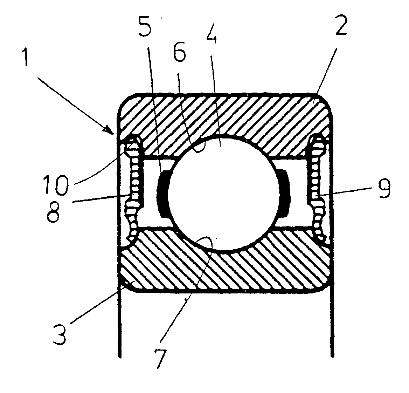

The invention hereinafter will be further described with reference to a non-limiting embodiment shown in the accompanying drawing.

The drawing shows in cross section a portion of a ball bearing 1 with outer race ring 2, an inner race ring 3 positioned concentrically in the outer race ring and a number of rolling bodies 4, i.e. in this case balls, guided and spaced apart in a cage 5, and rolling against race tracks 6, 7 in the bearing ring surfaces facing each other. The rolling bodies 4 in this case are electrically non-conductive, and they might preferably be manufactured from ceramic material.

Between the bearing rings and axially outside the race tracks 6, 7 and preferably at both sides, there are provided substantially annular sealing members 8,9, each of which in the embodiment shown is fixedly attached in an annular groove 10 provided therefore in the outer race ring 2, and which with its flexible inner edge is adapted slidingly to contact the inner race ring 3.

At least one of these sealing members 8, 9 has a high degree of electric conductivity, whereby it might be produced from a highly conductive material or be provided with inserts, coatings or the like, making it highly conductive. Such materials are preferably polymers.

In this manner it is possible to protect the function surfaces of the bearing, i.e. the race tracks 6, 7 and the rolling bodies 4 from electrical transfer which could mean a negative influence upon the operation of the bearing, whereas there is an integrated signal transfer and transfer of electric currents, in the case shown and described via the sealing member, which allows transfer of said signals or current to the race ring, e.g. the outer race ring 2, which is non-rotating and fixedly mounted in a bearing housing, from which the signals can be easily led away in conventional manner for processing as wanted in an appropriate place, or that electric current can be easily led away from the bearing in an unharmful manner, whereby there is no risk that electrical spark erosion will occur in the function surfaces.

By using non-conductive rolling bodies and a seal or cage acting as specified for transfer of electric current it is ascertained that the bearing will operate without being disturbed by the current and that the tranfer of the signal current is effected without variations in the resistance over the bearing, which will be the result if the current transfer should occur via the rolling bodies.

Although the bearing according to the invention has been shown as a single row deep groove ball bearing, the invention can of course be applied to any type of rolling bearing, wherein it is possible to use non-conductive rolling bodies, either they are made of non-conductive material or provided with a non-conductive coating.

In the embodiment shown in the drawing and described in connection thereto, the transfer of the signals between the two race rings has been effected by means of at least one of the sealing members, but it is of course possible to provide for signal transfer in a similar manner through e.g. a conductive two part seal having one sealing member fixedly connected to each bearing race ring and slidingly contacting each other, or via a conductive rolling body cage contacting both race rings. Even in this case the signal transfer from the rotary race ring takes place via members spaced from the function surfaces of the bearing, thus preventing them from negative current influences.

The invention thus is not limited to the embodiment shown and described but a plurality of modifications and variants are possible within the scope of the attached claims.

## Claims

1. A rolling bearing (1) having outer race ring (2), inner race ring (3) and a plurality of rolling bodies (4) arranged between said race rings and adapted to roll against race tracks (6, 7) provided in the race ring surfaces facing each other, the bearing further having at least one member (8, 9) spaced apart from the race tracks (6, 7) and contacting both said race rings (2, 3) and said at least one member (8, 9) contacting both race rings (2, 3) is highly electrically conductive, thereby allowing transfer of electrical currents out of the bearing in an unharmful manner and/or electrical signals through the bearing for processing outside the bearing
**characterized therein,**
that the rolling bodies (4) are electrically non-conductive.

2. A rolling bearing as claimed in claim 1,
**characterized therein,**
that the said at least one member (8, 9) is a sealing member fixedly connected to one of the race rings (2) and slidingly contacting the other race ring (3) at a position axially spaced apart from the said race tracks (6, 7).

3. A rolling bearing as claimed in claim 1,
**characterized therein,**
that the said at least one member is a rolling body cage (5) slidingly contacting both bearing race rings (2, 3).

4. A rolling bearing as claimed in anyone of claims 1-3,
**characterized therein,**
that the said at least one member (8, 9) consists of and/or incorporates portions made from an electrically conductive material.

5. A rolling bearing as claimed in claim 4,
**characterized therein,**
that the electrically conductive material is a polymer.

6. A rolling bearing as claimed in anyone of the preceding claims,
**characterized therein,**
that the rolling bodies (4) are made from non-conductive ceramic material.

7. A rolling bearing as claimed in anyone of claims 1 - 5,
**characterized therein,**
that the rolling bodies (4) are coated with a non-conductive material.

## Patentansprüche

1. Wälzlager (1) mit einem äußeren Laufring (2), einem inneren Laufring (3) und einer Mehrzahl von Wälzkörpern (4), die zwischen den Laufringen angeordnet sind und an Laufbahnen (6, 7) abwälzen, die an den einander zugewandten Laufringflächen vorgesehen sind, wobei das Lager weiterhin wenigstens ein Element (8, 9) mit Abstand von den Laufbahnen (6, 7) aufweist, das beide Laufringe (2, 3) berührt, und dieses wenigstens eine die beiden Laufringe (2, 3) berührende Element (8, 9) elektrisch gut leitfähig ist und dadurch in unschädlicher Weise die Übertragung elektrischer Ströme aus dem Lager und/oder von elektrischen Signalen durch das Lager zur Verarbeitung außerhalb des Lagers ermöglicht, **dadurch gekennzeichnet, daß** die Wälzkörper (4) elektrisch nicht-leitend sind.

2. Wälzlager nach Anspruch 1, **dadurch gekennzeichnet, daß** das wenigstens eine Element (8, 9) ein fest mit einem der Laufringe (2) verbundenes Dichtelement ist, das den anderen Laufring (3) an einer axial von den Laufbahnen (6, 7) beabstandeten Position gleitend berührt.

3. Wälzlager nach Anspruch 1, **dadurch gekennzeichnet, daß** das wenigstens eine Element ein Wälzkörperkäfig (5) ist, der beide Lagerlaufringe (2, 3) gleitend berührt.

4. Wälzkörper nach einem der Ansprüche 1 bis 3, **dadurch gekennzeichnet, daß** das wenigstens eine Element (8, 9) aus Bereichen besteht und/oder Bereiche aufweist, die aus einem elektrisch leitfähigen Material bestehen.

5. Wälzkörper nach Anspruch 4, **dadurch gekennzeichnet, daß** das elektrisch leitfähige Material ein Polymer ist.

6. Wälzlager nach einem der vorhergehenden Ansprüche, **dadurch gekennzeichnet, daß** die Wälzkörper (4) aus nichtleitendem Keramikmaterial bestehen.

7. Wälzlager nach einem der Ansprüche 1 bis 5, **dadurch gekennzeichnet, daß** die Wälzkörper (4) mit einem nichtleitfähigen Material beschichtet sind.

## Revendications

1. Palier à contact de roulement (1) ayant une bague extérieure (2), une bague intérieure (3) et plusieurs corps de révolution (4) disposés entre lesdites bagues et aptes à rouler contre des pistes (6, 7) ménagées dans les surfaces des bagues en regard l'une de l'autre, le palier comportant en outre au moins un élément (8, 9) espacé par rapport aux pistes (6, 7) et au contact des deux bagues (2, 3), et ledit au moins un élément (8, 9) au contact des deux bagues (2, 3) étant électriquement très conducteur, ce qui permet d'évacuer sans risque des courants électriques depuis le palier et/ou de faire passer des signaux électriques à travers le palier pour qu'ils soient traités à l'extérieur du palier,
**caractérisé en ce que**
les corps de révolution (4) sont électriquement non-conducteurs.

2. Palier à contact de roulement selon la revendication 1,
**caractérisé en ce que**
ledit au moins un élément (8, 9) est un élément d'étanchéité fixé à l'une des bagues (2) et en contact à glissement contre l'autre bague (3) dans une position espacée de manière axiale par rapport auxdites pistes (6, 7).

3. Palier à contact de roulement selon la revendication 1,
**caractérisé en ce que**
ledit au moins un élément est une cage (5) de corps de roulement en contact à glissement contre les deux bagues (2, 3) de palier.

4. Palier à contact de roulement selon l'une quelconque des revendications 1 à 3,
**caractérisé en ce que**
ledit au moins un élément (8, 9) est constitué de et/ou comporte des parties en matière électriquement conductrice.

5. Palier à contact de roulement selon la revendication 4,
**caractérisé en ce que**
la matière électriquement conductrice est un polymère.

6. Palier à contact de roulement selon l'une quelconque des revendications précédentes,
**caractérisé en ce que**
les corps de révolution (4) sont en matière céramique non-conductrice.

7. Palier à contact de roulement selon l'une quelconque des revendications 1 à 5,
**caractérisé en ce que**
les corps de révolution (4) sont revêtus d'une matière non-conductrice.
